# EUROPEAN PATENT APPLICATION

(11) **EP 4 708 198 A1**
(43) Date of publication of application: **11.03.2026**
(21) Application number: 24306469.8
(22) Date of filing: 09.09.2024
(51) Int. Cl.: G06T 9/00, G06T 13/20, H04N 19/25

(54) **AVATAR WITH A GAUSSIAN MIXTURE IN SCENE DESCRIPTION**

(71) Applicant: InterDigital CE Patent Holdings, SAS, 75017 Paris (FR)
(72) Inventor: GOSSELIN, Philippe Henri, 35235 THORIGNE-FOUILLARD (FR); COVA REGATEIRO, João Pedro, 35220 CHATEAUBOURG (FR); LE CLERC, Francois, 35590 L'HERMITAGE (FR); SRIR, Mohamed Ali, 35510 CESSON-SEVIGNE (FR)
(74) Representative: Vossius & Partner Patentanwälte Rechtsanwälte mbB

(57) **Abstract**

In a decoding method according to some embodiments, a file is obtained including data representing an avatar, the file including at least one fine-details data structure. Information in the fine-details data structure is parsed to determine whether a type of the fine details is a Gaussian type. In response to a determination that the type of fine details is a Gaussian type, a Gaussian mixture identified by the fine-details data structure is determined and is decoded.

## Description

### BACKGROUND

The current MPEG-I Scene Description (SD) format using the MPEG_node_avatar extension allows the definition of an avatar model. Thanks to these features, applications can know which mesh is an avatar, and use it as such. For instance, if the avatar is a usual human body mesh, an application can place it in a scene, and let the user move it in the world. The AJIF format described in EP Application No. 24305094.5, filed 15 January 2024, entitled "Avatar Json Interchange File Format" can also encode an avatar model.

Most of the objects in 3D scenes are made of smooth surfaces that can be modeled using 3D polygonal meshes and rendered with decent quality. However, some objects, such as hair or fur, have a complex and intricate structure that cannot be well modelled by a mesh. Rendering such objects with a good quality requires more complex models that account for the complex interaction of light with the fined-grained structure of the object. Recently, Gaussian splatting models were proposed to this end. They consist of a set of 3D Gaussians, each having its own geometry, opacity and view-dependent color. When rendering an image from a camera viewpoint, rays are traced from the camera center to each image pixel. The color of a pixel is computed from the integration of the colors and opacities of the Gaussians that are crossed by the corresponding ray along its path.

The representation and rendering of scenes described by Gaussian mixtures may be implemented using techniques referred to as Gaussian splatting, described for example in B. Kerbl et. al, "3D Gaussian Splatting for Real-Time Radiance Field Rendering," arXiv:2308.04079v1 (8 Aug 2023); and M.Turkulainen et al., "ON-Splatter: Depth and Normal Priors for Gaussian Splatting and Meshing," arXiv:2403.17822v2 (17 Jul 2024).

### SUMMARY

Briefly stated, in one embodiment, a decoding method comprises: obtaining a file including data representing an avatar, the file including at least one fine-details data structure; parsing information in the fine-details data structure to determine whether a type of the fine details is a Gaussian type; and in response to a determination that the type of fine details is a Gaussian type, determining a Gaussian mixture identified by the fine-details data structure and decoding the Gaussian mixture.

A decoding apparatus according to one embodiment comprises one or more processors configured to perform at least: obtaining a file including data representing an avatar, the file including at least one fine-details data structure; parsing information in the fine-details data structure to determine whether a type of the fine details is a Gaussian type; and in response to a determination that the type of fine details is a Gaussian type, determining a Gaussian mixture identified by the fine-details data structure and decoding the Gaussian mixture.

Some embodiments further comprise rendering the avatar based on the Gaussian mixture.

In some embodiments, the file includes a list of at least one level-of-detail data structure, the fine-details data structure being included in the level-of-detail data structure.

In some embodiments, the file includes a list of at least one cloud property, at least one of the cloud properties being the Gaussian mixture identified by the fine-details data structure.

Some embodiments further comprise parsing information in the cloud property to determine whether a type of the cloud property is a Gaussian mixture; and in response to a determination that the type of the cloud property is a Gaussian mixture, identifying a set of rotation information, scale information, or covariance matrix information for Gaussians in the Gaussian mixture, wherein decoding the Gaussian mixture includes decoding the set of rotation information, scale information, or covariance matrix information.

In some embodiments, the fine-details data structure is included in an MPEG avatar extension.

In some embodiments, the file includes a list of at least one mesh primitive data structure, the mesh primitive data structure including attribute data identifying a set of rotation information, scale information, or covariance matrix information for Gaussians in the Gaussian mixture, and wherein decoding the Gaussian mixture includes decoding the set of rotation information, scale information, or covariance matrix information.

In some embodiments, the attribute data is provided in an MPEG primitive Gaussian extension.

An encoding method according to some embodiments comprises: encoding Gaussian mixture data representing an avatar; encoding a file including data associated with the avatar, the file including at least one fine-details data structure; wherein the fine-details data structure includes information indicating that a type of the fine details is a Gaussian type; and wherein the fine details data structure includes information identifying the Gaussian mixture data.

An encoding apparatus according to some embodiments comprises one or more processors configured to perform at least: encoding Gaussian mixture data representing an avatar; encoding a file including data associated with the avatar, the file including at least one fine-details data structure; wherein the fine-details data structure includes information indicating that a type of the fine details is a Gaussian type; and wherein the fine details data structure includes information identifying the Gaussian mixture data.

In some embodiments, the file includes a list of at least one level-of-detail data structure, the fine-details data structure being included in the level-of-detail data structure.

In some embodiments, the file includes a list of at least one cloud properties at least one of the cloud properties being the Gaussian mixture identified by the fine-details data structure.

Some embodiments further comprise encoding information in the cloud property to indicate that a type of the cloud property is a Gaussian mixture; and encoding in the cloud property information identifying a set of rotation information, scale information, or covariance matrix information for Gaussians in the Gaussian mixture.

In some embodiments, the fine-details data structure is encoded in an MPEG avatar extension.

In some embodiments, the file includes a list of at least one mesh primitive data structure, the mesh primitive data structure including attribute data identifying a set of rotation information, scale information, or covariance matrix information for Gaussians in the Gaussian mixture, and wherein encoding the Gaussian mixture data includes encoding the set of rotation information, scale information, or covariance matrix information.

In some embodiments, the attribute data is provided in an MPEG primitive Gaussian extension.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 is a flow diagram illustrating parsing of a level-of-detail (LOD) property according to some embodiments.
FIG. 2 is a flow diagram illustrating parsing of a fine-detail property according to some embodiments.
FIG. 3 is a flow diagram illustrating parsing of a cloud property according to some embodiments.
FIG. 4 is a flow diagram illustrating parsing of a spherical harmonic property according to some embodiments.
FIG. 5 is a flow diagram illustrating parsing of an MPEG_node_avatar property according to some embodiments.
FIG. 6 is a flow diagram illustrating parsing of a mesh primitive property for a first embodiment using gITF.
FIG. 7 is a flow diagram showing the parsing of an attributes property as illustrated in block 911 of FIG. 6.
FIG. 8 is a flow diagram illustrating parsing of (key, value) pairs in the "attributes" of a mesh primitive when the primitive mode is 7 (GAUSSIAN) according to some embodiments.
FIG. 9 is a flow diagram illustrating parsing of a mesh primitive property for a second embodiment using gITF.
FIG. 10 is a flow diagram illustrating parsing of (key, value) pairs in the "attributes" of a mesh primitive when the primitive mode is 7 (GAUSSIAN) according to some embodiments.
FIG. 11 is a flow diagram illustrating parsing of (key, value) pairs in the "attributes" of "MPEG_primitive_gaussian" in the "extensions" property of a mesh primitive when the primitive mode is 7 (GAUSSIAN) according to some embodiments.
FIG. 12 is a functional block diagram of an apparatus on which encoding, decoding, rendering, and/or other functions described herein may be performed according to some embodiments.

### DETAILED DESCRIPTION

The present disclosure relates to the encoding of an avatar using a Gaussian mixture in 3D scene representations. With the use of Gaussian splatting, a Gaussian mixture can be used together with a mesh to render an avatar with a high quality. As a result, the signaling of an avatar with mesh and a Gaussian mixture may be useful for various applications. Furthermore, with mechanisms for an optional use of the Gaussian mixture, an application can only use the mesh to render an avatar, allowing the support of commodity devices with little computational power.

Using technologies such as those described in EP Patent Application No. 24305537.3, filed 5 April 2024, entitled "3D Gaussians Splatting in Scene Description" and EP Patent Application No. 24306025.8, filed 26 June 2024, entitled "3D Gaussians Splatting using Spherical Harmonics", it is possible to signal a 3D gaussian splatting in a format like gITF. However, there is currently no solution to signal an avatar model made up of a mesh and a gaussian mixture.

Prior solutions for avatar signaling do not provide for the signaling of Gaussian mixtures. In addition, existing solutions do not provide for the use of a mesh and a Gaussian mixture at the same time for an avatar.

The relevant context is that of avatar interoperability, where a user possesses an avatar encoded into one or more files (such as gITF or AJIF). It is desirable for the avatar files to contain all the information an application needs to implement the expected features, so that the application does not need to provide extra data or make choices about possible setups.

The present disclosure relates to the use of a mesh completed by an optional Gaussian mixture to model an avatar. In order to work, the following signaling problems are addressed:
- The signaling of one or more avatar meshes, which can be used alone to represent the avatar with a low quality.
- The signaling of one or more Gaussian mixtures, each one can be combined with at least one of the avatar meshes to get a high quality representation of the avatar. For each Gaussian mixture, the expected nature of the improvement may be signaled. For instance, if a Gaussian mixture can improve hair and another one wrinkles.
- The signaling of the possible connections between meshes and Gaussian mixtures.

Example embodiments may be implemented using different data formats, such as AJIF and gITF. In the present disclosure, one example is described in detail using AJIF, and another example is described in detail using gITF. Using the same principles, other embodiments may be implemented are possible with other scene description formats such as USD, FBX, and the like.

The AJIF format is described in EP Application No. 24305094.5 "Avatar Json Interchange File Format".

In an example embodiment, the AJIF format is expanded to include a "clouds" property, resulting in a modified AJIF format having the following content:

| **Name** | **Type** | **Description** | **Required** |
|---|---|---|---|
| data | RawData [1-*] | List of *RawData.* | No |
| **clouds** | **Cloud [1-*]** | **List of *Cloud.*** | **No** |
| geometries | Geometry [1-*] | List of *Geometry.* | No |
| nodes | Node [1-*] | List of *Node*. | No |
| textures | Texture [1-*] | List of *Texture.* | No |
| skeletons | Skeleton [1-*] | List of *Skeleton.* | No |
| controllers | Controller [1-*] | List of *Controller.* | No |
| lods | LOD [1-*] | List of *LOD (level of detail).* | No |
| metadata | Metadata | Metadata about the avatar. | No |
| asset | Asset | Information about the file. | Yes |

### AJIF Format.

In this and other charts regarding file content, the indication of whether a feature is "required" indicates only whether that feature is required by a particular syntax or file format; it should not be understood to mean that the feature is required by all possible file formats or all embodiments of the present disclosure.

In this example format, all contents but the two last ones ("metadata" and "asset") are collections of *items.* Each collection is a list of items that can be referenced with their index in the list, where the first index is zero. For instance, if the "nodes" collection contains three items, then the reference of the first one is 0, the reference of the second one is 1 and the reference of the third one is 2.

The "clouds" list contains a list of 3D representations for which the main anchors are points, like point clouds or Gaussian mixture. In an example embodiment, items of this list have the following properties:

| **Name** | **Type** | **Description** | **Required** |
|---|---|---|---|
| name | string | Cloud name. | No |
| type | string | Cloud type, like "point" or "Gaussian". | Yes |
| points | integer | References an item in the *"data"* collection with the point coordinates. The referenced item may be a float | Yes |
| | | tensor [number of points, 3]. | |
| normals | integer | References an item in the *"data"* collection with the point normals. The referenced item may be a float tensor [number of points, 3]. | No |
| colors | integer | References an item in the *"data"* collection with the point colors. The referenced item may be a float tensor [number of points, 3]. Not present if "sphericalHarmonics" is present. | No |
| Spherical Harmonics | Spherical Harmonic [1-*] | List of *SphericalHarmonic.* Not present if "colors" is present. | No |
| alphas | integer | References an item in the *"data"* collection with the point opacities. The referenced item may be a float tensor [number of points]. | No |
| If type is "gaussian" { | | | |
| rotations | integer | References an item in the *"data"* collection with the rotations (quaternions). The referenced item may be a float tensor [number of points, 4]. | No |
| scales | integer | References an item in the *"data"* collection with the scales. The referenced item may be a float tensor [number of points, 3]. | No |
| } | | | |

### AJIF Cloud property.

The "name" property describes the name of the cloud. It can be used for indexing, e.g., to retrieve the cloud knowing its name.

The "type" property describes the type of the cloud. "point" type is a point cloud, and "gaussian" is a Gaussian mixture. An AJIF file in some embodiments may include a plurality of clouds, including the possibility of a file encoding one or more Gaussian mixtures and one or more point clouds.

The "points" property describes the coordinates of the points. For type "point", this is the coordinates of each point of the cloud, and for type "Gaussian", this is the coordinates of the center of each Gaussian.

The "normals" property describes the normal of each point or Gaussian. The normal for a point can be defined as the normal to the surface patch of the object surrounding the considered point. In the paper titled "Relightable 3D Gaussian: Real-Time Point Cloud Relighting with BRDF Decomposition and Ray Tracing", published by J. Gao et al. in arXiv paper arXiv:2311.16043, the normal vectors associated to each 3D Gaussian are leveraged to improve the estimation of the colors of pixels in each synthesized view of the 3D scene, through an explicit modeling of the Bidirectional Reflectance Distribution Function for each Gaussian.

The "colors" property describes the RGB color of each point or Gaussian. In example embodiments, it is exclusive with "sphericalHarmonics".

The "sphericalHarmonics" property describes the RGB color each point or Gaussian using a Spherical Harmonics model. Items in the list describe the parameters of a spherical harmonic model (see the description below of "Levels of Detail"). In example embodiments, it is exclusive with "colors".

The "alphas" property describes the opacity of each point or Gaussian.

If "type" is "Gaussian", then "rotations" and "scales" properties are expected. The "rotations" property describes the rotation of each Gaussian in the mixture, each rotation being represented as a quaternion. The "scales" property describes the scale of each Gaussian in the mixture, each scale being represented with three values (X, Y, Z), each value defining the scale along an axis.

In some embodiments, the "rotations" and "scales" properties can be replaced by a "covs" property, which describes the covariance matrices of each Gaussian in the mixture, e.g. a tensor [number of points, 3, 3].

In each LOD (level of detail) the corresponding fine details can be signaled through the addition of a "fineDetails" property, as follows:

| **Name** | **Type** | **Description** | **Required** |
|---|---|---|---|
| name | string | LOD name. | No |
| lod | integer | Indicates the level of details. Lower values correspond to higher level of details. | No, default 0 |
| mesh | integer | References a node in the "nodes" collection. | No |
| skeletons | integer [1-*] | List of references to skeletons in the *"skeletons"* collection. | No |
| controllers | integer [1-*] | List of references to controllers in the *"controllers"* collection. | No |
| **fineDetails** | **FineDetail [1-*]** | **List of fine details models.** | **No** |

### LOD property.

The "fineDetails" property contains the list of properties which allows the improvement of the avatar model for this LOD, as described in greater detail below.

A second example makes use of the glTF format. In the current description, the proposed format follows the glTF format and is compatible with the recent MPEG-I SD standard.

An example embodiment extends the existing "MPEG_node_avatar" extension described in ISO/IEC 23090-14:2023(E), Information technology Coded representation of immersive media Part 14: Scene description. The extension to MPEG_node_avatar property provides a "fineDetails" property as follows:

| **Name** | **Type** | **Description** | **Required** |
|---|---|---|---|
| isAvatar | boolean | If true, this node contains the root of an avatar mesh. | Yes |
| type | string | The type of the Avatar representation is provided as a URN. | Yes |
| mappings | AvatarMapping [1-*] | The mapping between child nodes and semantics. | Yes |
| **fineDetails** | **FineDetail [1-*]** | **List of fine details models.** | **No** |

### MPEG_node_avatar property.

The "fineDetails" property, described in further detail below, contains the list of properties which allows the improvement of the avatar model. In some embodiments, the MPEG_node_avatar property may contain a plurality of fine-detail data structures, including combinations in which some fine-detail data structures are Gaussian and others are not.

In example embodiments, the signaling of 3D Gaussians is extended to allow the signaling of a normal and depth for each Gaussian.

In one example embodiment, the "attributes" property of a primitive in the "primitives" list of the "meshes" root list is extended with the addition of keys "ROTATION" and "SCALE" as follows:

| **Name** | **Accessor Type(s)** | **Component Type** | **Description** |
|---|---|---|---|
| POSITION | VEC3 | float | Unitless XYZ vertex positions |
| NORMAL | VEC3 | float | Normalized XYZ vertex normals |
| TANGENT | VEC4 | float | XYZW vertex tangents where the XYZ portion is normalized, and the W component is a sign value (-1 or +1) indicating handedness of the tangent basis |
| TEXCOORD_n | VEC2 | float unsigned byte normalized unsigned short normalized | ST texture coordinates |
| COLOR_n | VEC3 | float | RGB or RGBA vertex color linear multiplier |
| | VEC4 | unsigned byte normalized unsigned short normalized | |
| JOINTS_n | VEC4 | unsigned byte unsigned short | Joint index |
| WEIGHTS_n | VEC4 | float | Weights |
| | | unsigned byte normalized unsigned short normalized | |
| COVARIANCE | MAT3 | float | Covariance matrices |
| SH0_n | VEC3 | float | Spherical Harmonics coef of deg. 0 for R, G and B |
| SH1_n | VEC3 | float | Spherical Harmonics coef of deg. 1 for R, G and B |
| SH2_n | VEC3 | float | Spherical Harmonics coef of deg. 2 for R, G and B |
| ALPHA | SCALAR | float | Opacity |
| **ROTATION** | **VEC4** | **float** | **Rotation vector (quaternion).** |
| **SCALE** | **VEC3** | **float** | **Scale XYZ factor.** |

### Attributes property.

The "ROTATION" attribute key maps to the index of an accessor which contains the rotation vector (quaternion) of each Gaussian. The number of quaternions is the same of the number of Gaussian in the mixture. If the "ROTATION" attribute key is present, the "COVARIANCE" attribute key is not present.

The "SCALE" attribute key maps to the index of an accessor which contains the scale factors (X, Y, Z) of each Gaussian. The number of scale factors (X, Y, Z) is the same as the number of Gaussians in the mixture. If the "SCALE" attribute key is present, the "COVARIANCE" attribute key is not present.

If the "COVARIANCE" attribute key is present, then the "ROTATION" and "SCALE" attribute keys are not present.

In another embodiment, the "attributes" property of an "MPEG_primitive_gaussian" extension in a primitive in the "primitives" list of the "meshes" root list is extended with the new keys "ROTATION" and "SCALE" as follows:

| **Name** | **Accessor Type(s)** | **Component Type** | **Description** |
|---|---|---|---|
| COVARIANCE | MAT3 | float | Covariance matrices |
| SH0_n | VEC3 | float | Spherical Harmonics coefs of deg. 0 for R, G and B |
| SH1_n | VEC3 | float | Spherical Harmonics coefs of deg. 1 for R, G and B |
| SH2_n | VEC3 | float | Spherical Harmonics coefs of deg. 2 for R, G and B |
| ALPHA | SCALAR | float | Opacity |
| **ROTATION** | **VEC4** | **float** | **Rotation vector (quaternion).** |
| **SCALE** | **VEC3** | **float** | **Scale XYZ factor.** |

### Attributes property.

The "ROTATION" attribute key maps to the index of an accessor which contains the rotation vector (quaternion) of each Gaussian. The number of quaternions is the same of the number of Gaussian in the mixture. If the "ROTATION" attribute key is present, the "COVARIANCE" attribute key is not present.

The "SCALE" attribute key maps to the index of an accessor which contains the scale factors (X, Y, Z) of each Gaussian. The number of scale factors (X, Y, Z) is the same of the number of Gaussian in the mixture. If the "SCALE" attribute key is present, the "COVARIANCE" attribute key is not present.

If the "COVARIANCE" attribute key is present, then the "ROTATION" and "SCALE" attribute keys is not present.

In another embodiment, the "attributes" property of an "extras" property in a primitive in the "primitives" list of the "meshes" root list is extended with the addition of the keys "ROTATION" and "SCALE":

| **Name** | **Accessor Type(s)** | **Component Type** | **Description** |
|---|---|---|---|
| COVARIANCE | MAT3 | float | Covariance matrices |
| SH0_n | VEC3 | float | Spherical Harmonics coefs of deg. 0 for R, G and B |
| SH1_n | VEC3 | float | Spherical Harmonics coefs of deg. 1 for R, G and B |
| SH2_n | VEC3 | float | Spherical Harmonics coefs of deg. 2 for R, G and B |
| ALPHA | SCALAR | float | Opacity |
| **ROTATION** | **VEC4** | **float** | **Rotation vector (quaternion).** |
| **SCALE** | **VEC3** | **float** | **Scale XYZ factor.** |

### Attributes property.

The "ROTATION" attribute key maps to the index of an accessor which contains the rotation vector (quaternion) of each Gaussian. The number of quaternions is the same of the number of Gaussian in the mixture. If the "ROTATION" attribute key is present, the "COVARIANCE" attribute key is not present.

The "SCALE" attribute key maps to the index of an accessor which contains the scale factors (X, Y, Z) of each Gaussian. The number of scale factors (X, Y, Z) is the same of the number of Gaussian in the mixture. If the "SCALE" attribute key is present, the "COVARIANCE" attribute key is not present.

If the "COVARIANCE" attribute key is present, then the "ROTATION" and "SCALE" attribute keys is not present.

Regardless of the format used, (e.g. for AJIF, gITF, or other formats), a FineDetail property may be provided that contains the following properties:

| **Name** | **Type** | **Description** | **Required** |
|---|---|---|---|
| name | string | The name of this fine details. | No |
| description | string | Describe the fine details. | No |
| type | string | The type of fine details, for instance "Gaussian". | Yes |
| purpose | string | The purpose of the fine details. | Yes |
| If type is "gaussian" { | | | |
| mixture | integer | References an item with the Gaussian mixture. | No |
| } | | | |

### FineDetail property.

The "name" property describes the name of the fine details. It can be used for indexing, e.g., to retrieve the fine details knowing its name.

The "description" property describes the fine details. For instance, a description can be used in user interfaces to help the user understand which landmark set is being used.

The "type" property describes the type of fine details. If "type" is "gaussian", then the fine details are based on a Gaussian mixture, and Gaussian splatting should be used for rendering.

The "purpose" property describes the purpose of the fine details. These purposes can be defined by an application or a standard, for instance. For example, "urn:mpeg:avatar:finedetails:hair" can be used to indicate that these fine details improve the representation and rendering of hair.

The "mixture" property may only be allowed when "type" is "gaussian", and it describes the Gaussian mixture to use. For AJIF, it is the index of an item in the "clouds" root property, and for gITF, it is the index of an item in the "meshes" root property. In both cases, a Gaussian mixture is expected.

The *SphericalHarmonic* property describes the parameters for a degree of a spherical harmonic and may be as follows:

| **Name** | **Type** | **Description** | **Required** |
|---|---|---|---|
| degree | integer | Degree of the spherical harmonic. | Yes |
| weights | integer | References an item in the *"data"* collection with the spherical harmonic weights. The referenced item may be a float tensor [number of points, 2*degree+1, 3]. | Yes |

### SphericalHarmonic property.

The "degree" property describes the degree of the spherical harmonic.

The "weights" property describes the weights for the spherical harmonic of degree "degree". There is a weight value for each color (Red, Green and Blue). For each color, the number of a weight depends on the degree of the spherical harmonic.

In an example embodiment, only the spherical harmonic of one degree is signaled in a *SphericalHarmonic,* the one of previous degrees are not signaled in a *SphericalHarmonic.* In order to signal a spherical harmonic model made of all spherical harmonics up to a given degree, one or more *SphericalHarmonic* are required. The first *SphericalHarmonic* signals the spherical harmonic of degree 0 (its "degree" property is 0), the second *SphericalHarmonic* signals the spherical harmonic of degree 1 (its "degree" property is 1), and so on.

The following is an example of an avatar encoded using the AJIF format:

```
 {
  "asset": {
    "version": "1.0",
    "copyright": "Interdigital R&D"
  },
  "data": [...],
  "geometries": [...],
  "nodes": [...],
  "clouds": [
    {
       "name": "GaussianMixture",
       "type": "gaussian",
       "points": 2,
       "normals": 3,
       "alphas": 4,
       "rotations": 5,
       "scales": 6,
       "sphericalHarmonics": [
         {
           "degree": 0,
           "weights": 7
         },
         {
           "degree": 1,
           "weights": 8
         }.
         {
           "degree": 2,
           "weights": 9
         }
       ]
    }
  ],
  "lods": [
    {
       "name": "main",
       "lod": 0,
       "mesh": 0,
       "fineDetails": [
         {
           "description": "Hair details",
           "type": "gaussian",
           "purpose": "urn:mpeg:avatar:finedetails:hair",
           "mixture": Θ
         }
       ]
    }
  ]
  }
```

The content of this avatar description may be parsed as described in EP Application No. 24305094.5 "Avatar Json Interchange File Format", except for the "lods" and "clouds" root properties.

In an example embodiment, the first item of the "clouds" root property is parsed: its name is "GaussianMixture" ("name" is "GaussianMixture"), it is a gaussian mixture ("type" is "gaussian"), the Gaussian are found in the following way:
- Gaussian centers are found in the item of index 2 in the "data" root list ("points" is 2)
- Gaussian normals are found in the item of index 3 in the "data" root list ("normals" is 3)
- Gaussian opacities are found in the item of index 4 in the "data" root list ("alphas" is 4)
- Gaussian rotations are found in the item of index 5 in the "data" root list ("rotations" is 5)
- Gaussian scales are found in the item of index 6 in the "data" root list ("scales" is 6).

The "sphericalHarmonics" items are parsed:
- The first item of "sphericalHarmonics" describes the weights for spherical harmonics of degree 0 for each Gaussian ("degree" is 0), which can be found in the item of index 7 in the "data" root list ("weights" is 7).
- The second item of "sphericalHarmonics" describes the weights for spherical harmonics of degree 1 for each Gaussian Gaussian ("degree" is 1), which can be found in the item of index 8 in the "data" root list ("weights" is 8).
- The third item of "sphericalHarmonics" describes the weights for spherical harmonics of degree 2 for each Gaussian Gaussian ("degree" is 2), which can be found in the item of index 9 in the "data" root list ("weights" is 9).

The first item of the "lods" root property is parsed: the name of this item is "main" ("name" is "main"), the level of details is 0 ("lod" is 0) and the mesh to use is the one of index 0 in the "meshes" root list ("mesh" is 0). Then, the "fineDetails" property is parsed: there is a single item. This fine details item can be described with "Hair details" ("description" is "Hair details"), it is based on a gaussian mixture ("type" is "gaussian"), its purpose is to enhance the hair ("purpose" is "urn:mpeg:avatar:finedetails:hair"), and the gaussian mixture to use is the one of index 0 in the "clouds" root list ("mixture" is 0).

When the rendering of this avatar model is performed, the application may use only the mesh (defined in the first item of the "meshes" root list) or may use also use the Gaussian mixture (defined in the first item of the "clouds" root list). This choice can depend on context; for instance, the user can choose to use it or not; the application can also choose to disable the Gaussian mixture because the hardware is insufficient or the avatar is too far from the camera.

In another example embodiment, an avatar may be encoded using the gITF format as follows:

```
 {
  "asset": {
    "generator": "Interdigital R&D France, Video Lab, MetaVideo, Interactive
    Media, Immersive teleprescence",
    "version": "2.0"
  },
  "extensionsUsed": ["MPEG_node_avatar", "MPEG_primitive_gaussian"],
  "accessors": [...],
  "bufferViews": [...],
  "buffers": [...],
  "meshes": [
    {
      "primitives": [
        {
          "attributes": {
            "POSITION": 0
          }
        }
      ],
      "indices": 1
    },
    {
      "primitives": [
        {
          "attributes": {
            "POSITION": 2,
            "NORMAL": 3
          },
          "extensions": {
            "MPEG_primitive_gaussian": {
              "attributes": {
                "ALPHA": 4,
                "ROTATION": 5,
                "SCALE": 6,
                "SH0_0": 7,
                "SH1_0": 8,
                "SH2_0": 9
              }
            }
          }
        }
      ]
    }
  ],
  "nodes": [
    {
      "extensions": {
        "MPEG_node_avatar": {
          "isAvatar": true,
          "mappings": [{
            "node": 0,
            "path": "full_body"
          }],
          "type": "urn:mpeg:sd:2023:avatar"
        }
      },
      "mesh": 0,
      "fineDetails": [
        {
          "description": "Hair details",
          "type": "gaussian",
          "purpose": "urn:mpeg:avatar:finedetails:hair",
          "mixture": 1
        }
      ]
    }
  ],
  "scene": 0,
  "scenes": [{
    "nodes": [0]
  }]
  }
```

In an example embodiment, the glTF parser first loads all content except the one of the "meshes" and "nodes" root properties. Then, the parser decodes the items in the "meshes" root property. The first item of "meshes" has only one primitive, with vertices found in the accessor of index 0 ("POSITION" in "attributes" is 0) and vertex indices found in the accessor of index 1 ("indices" is 1). The second item of "meshes" has only one primitive. This primitive is a Gaussian mixture because there is a "MPEG_primitive_gaussian" extension. The Gaussian properties may be found in the following way:
- Gaussian centers are found in the accessor of index 2 ("POSITION" in "attributes" is 2)
- Gaussian normals are found in the accessor of index 3 ("NORMAL" in "attributes" is 3)
- Gaussian opacities are found in the accessor of index 4 ("ALPHA" in "attributes" of "MPEG_primitive_gaussian" is 4)
- Gaussian rotations are found in the accessor of index 5 ("ROTATION" in "attributes" of "MPEG_primitive_gaussian" is 5)
- Gaussian scales are found in the accessor of index 6 ("SCALE" in "attributes" of "MPEG_primitive_gaussian" is 6)
- Spherical harmonic weights of degree 0 are found in the accessor of index 7 ("SH0_0" in "attributes" of "MPEG_primitive_gaussian" is 7)
- Spherical harmonic weights of degree 1 are found in the accessor of index 8 ("SH1_0" in "attributes" of "MPEG_primitive_gaussian" is 8)
- Spherical harmonic weights of degree 2 are found in the accessor of index 9 ("SH2_0" in "attributes" of "MPEG_primitive_gaussian" is 9).

Then, the parser decodes the MPEG_node_avatar content found in the first node. It indicates that the node is an avatar ("isAvatar" is true), the type is the standard one ("type" is "urn:mpeg:sd:2023:avatar"), there is one part: the full body ("mappings" property). The mesh of the avatar model is the one of index 0 in the "meshes" root list ("mesh" is 0). Then, the "fineDetails" property is parsed: there is a single item. This fine details item can be described with "Hair details" ("description" is "Hair details"), it is based on a gaussian mixture ("type" is "gaussian"), its purpose is to enhance the hair ("purpose" is "urn:mpeg:avatar:finedetails:hair"), and the gaussian mixture to use is the one of index 1 in the "meshes" root list ("mixture" is 1).

In example embodiments, when the rendering of this avatar model is performed, the application may use the mesh alone (defined in the first item of the "meshes" root list) or in combination with the Gaussian mixture (defined in the first item of the "clouds" root list). In some embodiments, the renderer makes this choice based on factors such as, for example, a user selection, the processing power of the rendering hardware, and/or the distance of the avatar. For example, the rendering application may disable use of the Gaussian mixture (and thus perform rendering using only a mesh) if the processing power of the hardware is insufficient or if the avatar is too far from the camera.

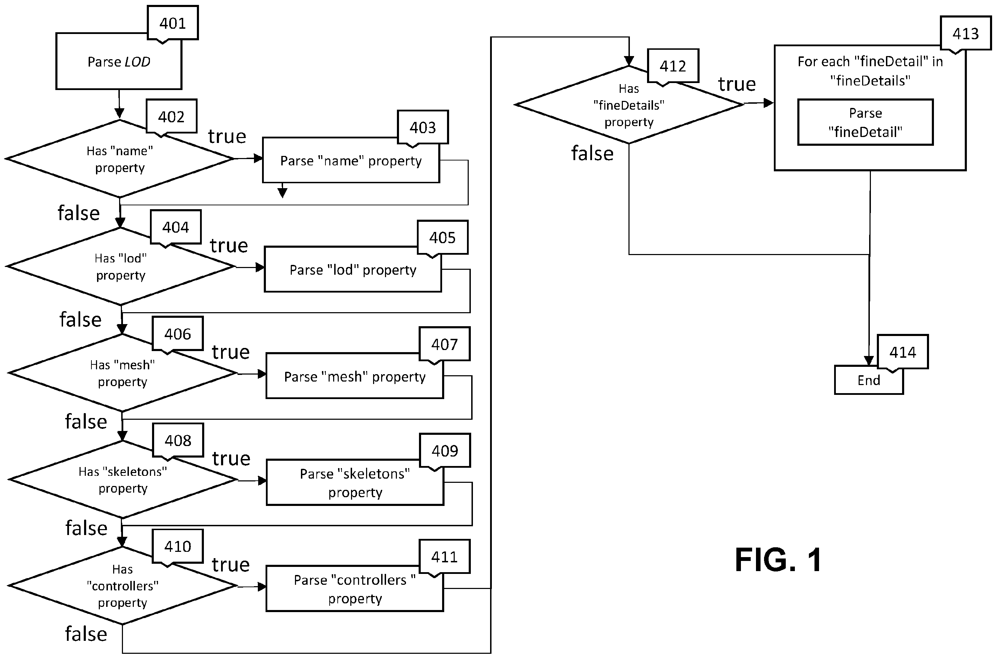

FIG. 1 is a flow diagram illustration parsing of a level-of-detail (LOD) property according to some embodiments.

As illustrated at 401, this process happens every time a LOD is being processed in the AJIF file. At 402, 403, the "name" property is parsed, if present. At 404, 405, the "lod" property is parsed, if present. At 406, 407: The "mesh" property is parsed, if present. At 408, 409, the "skeletons" property is parsed, if present. At 410, 411, the "controllers" property is parsed, if present. At 412, 413, if "fineDetails" property is present (412), each item of "fineDetails" is parsed (413). The parsing of the "fineDetail" property is described in greater detail below. At 414, parsing ends with success. This example processing method is not specific to gITF or AJIF (or any other scene description format).

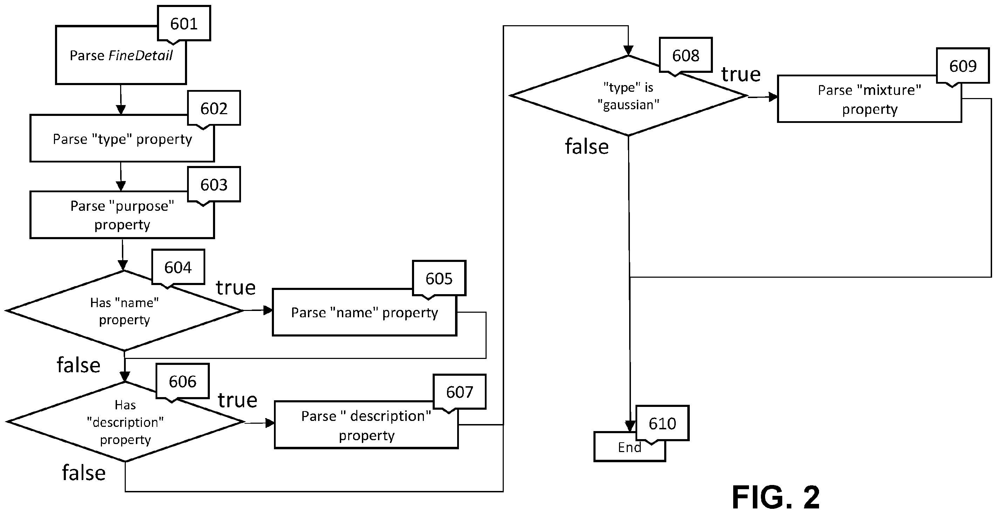

FIG. 2 is a flow diagram illustrating parsing of a fine-detail property according to some embodiments.

As illustrated at 601, this process may be performed every time a *FineDetail* is being processed. At 602, the "type" property is parsed. (In some embodiments, this property is mandatory, and an error may be raised if not present.) At 603, the "purpose" property is parsed. (In some embodiments, this property is mandatory, and an error may be raised if not present.) At 604, 605, the "name" property is parsed, if present. At 606, 607, the "description" property is parsed, if present. At 608, 609, if "type" is "gaussian", then the "mixture" property is parsed. (In some embodiments, this property is mandatory, and an error may be raised if not present.) The value of "mixture" is the index of an existing object: for example, in AJIF, it refers to an item in the "clouds" root list, and in glTF refers to an item in the "meshes" root list. At 610. parsing ends with success.

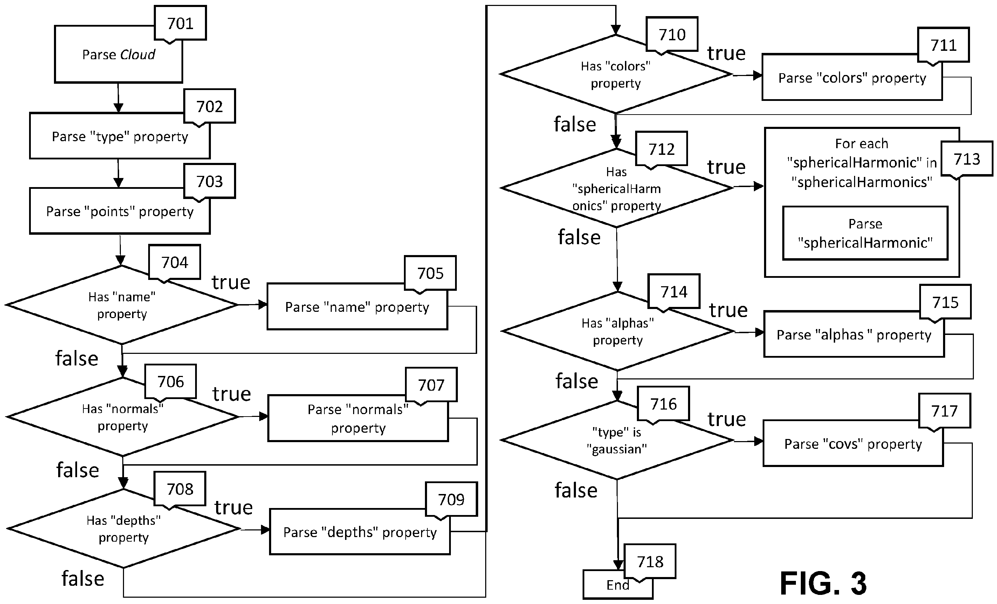

FIG. 3 is a flow diagram illustrating parsing of a cloud property according to some embodiments.

As illustrated at 701, this process happens every time a *Cloud* is being processed in a AJIF file. At 702, the "type" property is parsed. (In some embodiments, this property is mandatory, and an error may be raised if not present.) At 703, the "points" property is parsed. (In some embodiments, this property is mandatory, and an error may be raised if not present.) The value of "points" is the index of an existing item in the "data" root list. At 704, 705, the "name" property is parsed, if present. At 706, 707, the "normals" property is parsed, if present. The value of "normals" may be the index of an existing item in the "data" root list. At 708, 709, the "depths" property is parsed, if present. The value of "depths" may be the index of an existing item in the "data" root list. At 710, 711, the "colors" property is parsed, if present. The value of "colors" may be the index of an existing item in the "data" root list. At 712, 713, if "sphericalHarmonics" property is present (712), each item of "sphericalHarmonics" is parsed (713). The parsing of the "sphericalHarmonic" property is described in greater detail below. At 714, 715, the "alphas" property is parsed, if present. The value of "alphas" may be the index of an existing item in the "data" root list. At 716, 717, if the "type" is "gaussian", the "covs" property is parsed, if present (mandatory, error if not present). The value of "covs" may be the index of an existing item in the "data" root list. At 718, parsing ends with success.

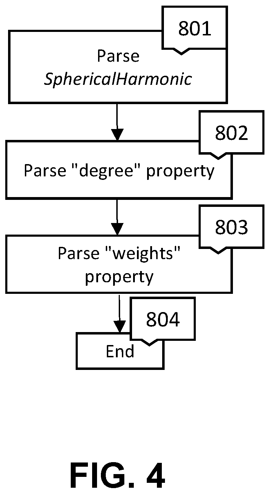

FIG. 4 is a flow diagram illustrating parsing of a spherical harmonic property according to some embodiments. This processing is not specific to gITF or AJIF (or any other scene description format).

As illustrated at 801, this process may be performed every time a *SphericalHarmonic* (cf Section **Error! Reference source not found.)** is being processed. At 802, the "degree" property is parsed. (In some embodiments, this property is mandatory, and an error may be raised if not present.) At 803, the "weights" property is parsed. (In some embodiments, this property is mandatory, and an error may be raised if not present.) The value of "weights" is the index of an existing object: for example, in AJIF, it refers to an item in the "data" root list, and in glTF it refers to an item in the "accessor" root list. At 804, parsing ends with success.

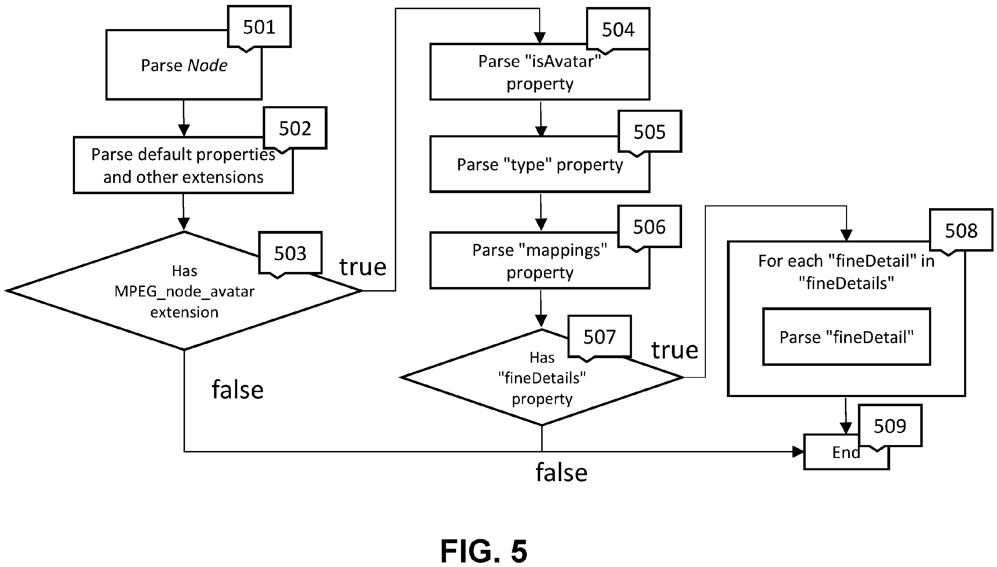

FIG. 5 is a flow diagram illustrating parsing of an MPEG_node_avatar property according to some embodiments.

As illustrated at 501, this process may be performed every time a node is being processed in the glTF file. At 502, the glTF loader first decodes the standard properties and possible extensions. At 503, if the MPEG_node_avatar is present, the loader parses it, otherwise parsing ends. At 504, the "isAvatar" property is parsed. (In some embodiments, this property is mandatory, and an error may be raised if not present.) At 505, the "type" property is parsed. (In some embodiments, this property is mandatory, and an error may be raised if not present.) At 506, the "mappings" property is parsed. At 507, 508, if a "fineDetails" property is present, each item of "fineDetails" is parsed. The parsing of the "fineDetail" property is described in greater detail below. At 509, parsing ends with success.

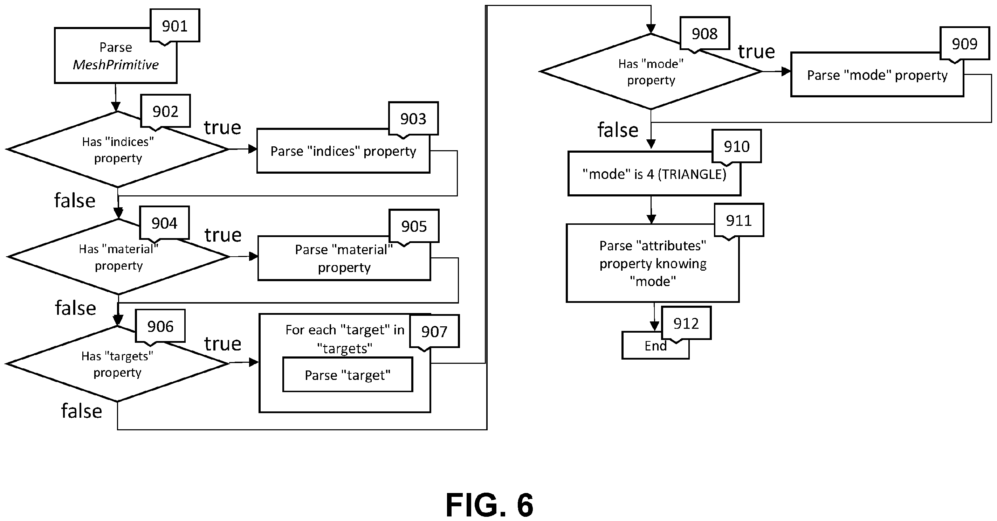

FIG. 6 is a flow diagram illustrating parsing of a mesh primitive property for a first embodiment using gITF.

As illustrated at 901, this process may be performed every time a mesh primitive is being processed in the glTF file. At 902, 903, if the "indices" property is present, then it is parsed. The value of "indices" is the index of an existing item in the "accessor" root list. At 904, 905, if the "material" property is present, then it is parsed. The value of "material" is the index of an existing item in the "materials" root list. At 906, 907, if a "targets" property is present, each item of "targets" is parsed. At 908, 909, 910, if a "mode" property is present, it is parsed. Otherwise, its default value is 4 (corresponding to TRIANGLE). At 911, the "attributes" property is parsed. (In some embodiments, this property is mandatory, and an error may be raised if not present.) Parsing of the "attributes" property is described in greater detail below. At 912, parsing ends with success.

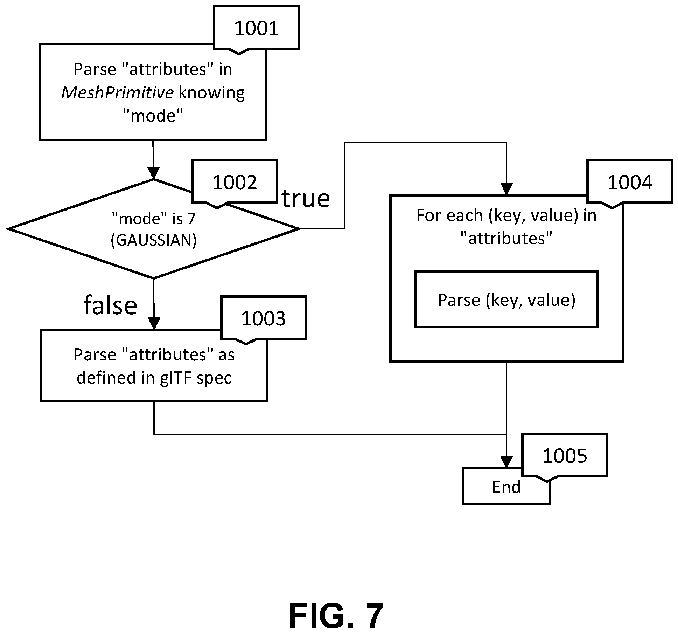

FIG. 7 is a flow diagram showing the parsing of an attributes property as illustrated in block 911 of FIG. 6.

As illustrated at 1001, this process happens every time the "attributes" property of a mesh primitive is being processed in the glTF file. At 1002, 1003, 1004, if the "mode" property of a mesh primitive is 7 (GAUSSIAN), then each (key, value) pair of "attributes" is parsed (1004) following the diagram below (1006-1023). Otherwise, the parsing of "attributes" is as defined in the glTF 2.0 specification (1003). At 1005, parsing ends with success.

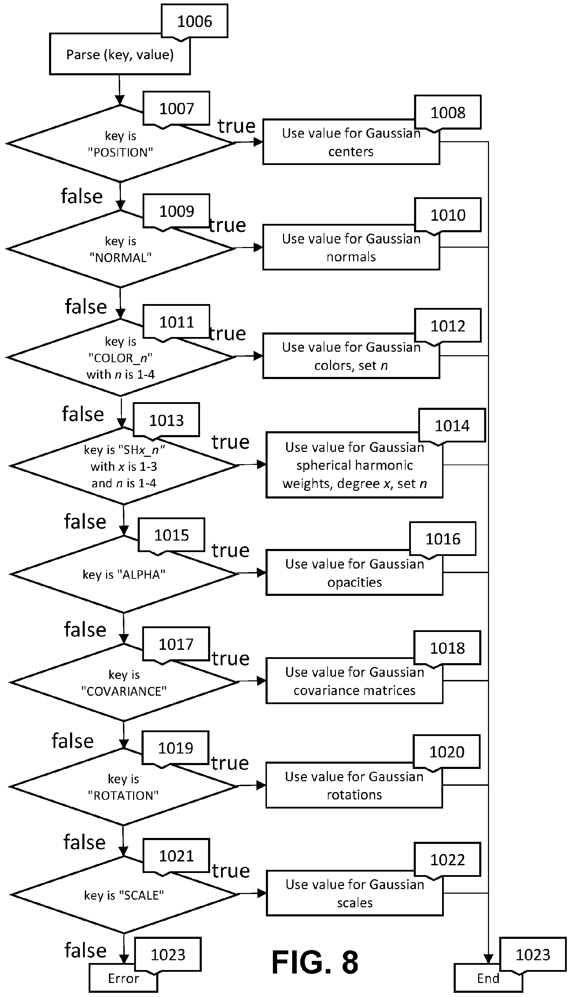

FIG. 8 is a flow diagram illustrating parsing of (key, value) pairs in the "attributes" of a mesh primitive when the primitive mode is 7 (GAUSSIAN) according to some embodiments.

As illustrated at 1006, this process may be performed every time a (key, value) pair in the "attributes" property of a mesh primitive with a mode of 7 (GAUSSIAN) is being processed in the glTF file. At 1007, 1008, if the key is "POSITION", then the value is the index of an existing accessor in the gITF. The referenced accessor contains the center of each Gaussian. At 1009, 1010, if the key is "NORMAL", then the value is the index of an existing accessor in the gITF. The referenced accessor contains the normal of each Gaussian. At 1011, 1012, if the key is "COLOR_n" where *n* is 1 ("COLOR_1"), 2 ("COLOR_2), 3 ("COLOR_3") or 4 ("COLOR_4"), then the value is the index of an existing accessor in the gITF. The referenced accessor contains the color of each Gaussian for set *n.* If spherical harmonics were already defined for set *n*, then the parsing fails. At 1013, 1014, if the key is "SHx_n" where x is 0, 1 or 2 and *n* is 1, 2, 3 or 4 (for instance, for "SH2_3", then x is 2 and *n* is 3), then the value is the index of an existing accessor in the gITF. The referenced accessor contains the weights of spherical harmonics of degree x of each Gaussian for set *n.* If colors were already defined for set *n*, then the parsing fails. At 1015, 1016, if the key is "ALPHA", then the value is the index of an existing accessor in the gITF. The referenced accessor contains the opacity of each Gaussian. At 1017, 1018, if the key is "COVARIANCE", then the value is the index of an existing accessor in the gITF. The referenced accessor contains the covariance matrix of each Gaussian. If the rotations or scales were already defined, then the parsing fails. At 1019, 1020, if the key is "ROTATION", then the value is the index of an existing accessor in the gITF. The referenced accessor contains the rotation (a quaternion) of each Gaussian. If the covariance matrices were already defined, then the parsing fails. At 1021, 1022, if the key is "SCALE", then the value is the index of an existing accessor in the gITF. The referenced accessor contains the scale factors for each axis (X, Y, Z) of each Gaussian. If the covariance matrices were already defined, then the parsing fails. An error is issued at 1023 if the key is invalid. At 1024, parsing of this (key, pair) pair ends with success.

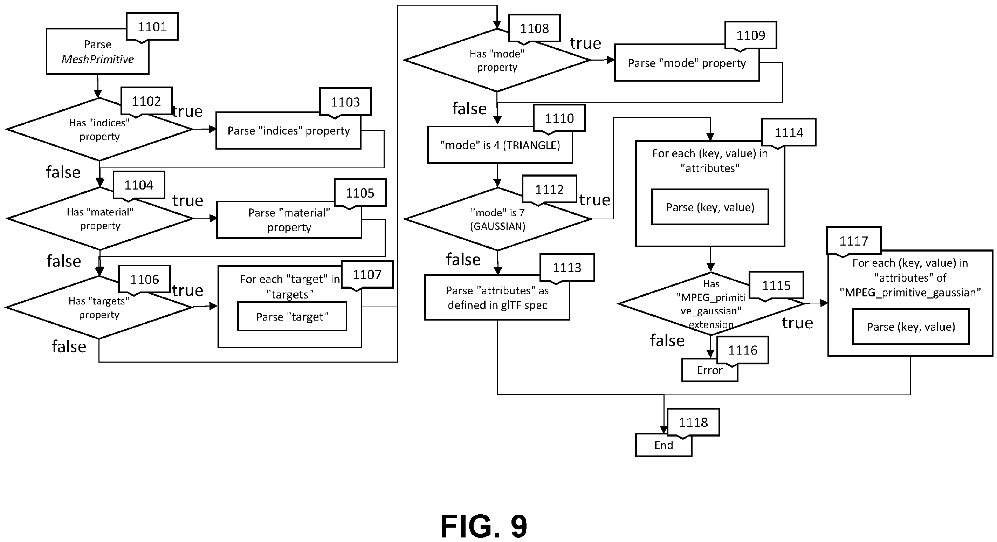

FIG. 9 is a flow diagram illustrating parsing of a mesh primitive property for a second embodiment using gITF.

As illustrated at 1101, this process happens every time a mesh primitive is being processed in the glTF file. At 1102, 1103, if the "indices" property is present, then it is parsed. The value of "indices" is the index of an existing item in the "accessor" root list. At 1104, 1105, if the "material" property is present, then it is parsed. The value of "material" is the index of an existing item in the "materials" root list. At 1106, 1107, if the "targets" property is present, each item of "targets" is parsed. At 1108, 1109, 1110, if the "mode" property is present, it is parsed. Otherwise, its default value is 4 (corresponding to TRIANGLE). At 1112, 1113, 1114, if "mode" is not 7, then the default parsing of "attributes" is applied (as defined in gITF 2.0 specification). Otherwise, each pair (key, value) of "attributes" is parsed as described in greater detail below (1201-1209). At 1115, 1116, 117, if the "extensions" property is present, and contains "MPEG_primitive_gaussian", then each pair (key, value) of its "attributes" property (present in "MPEG_primitive_gaussian") is parsed as shown in greater detail below (1301-1309). At 1118, parsing ends with success.

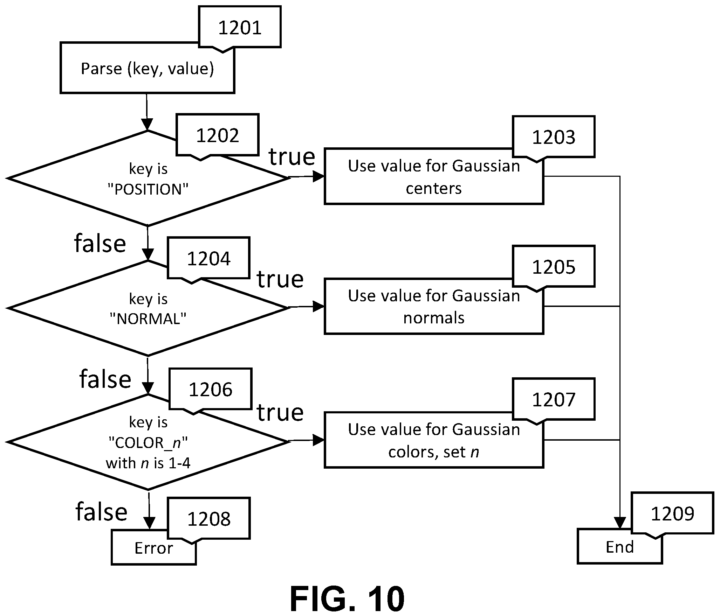

FIG. 10 is a flow diagram illustrating parsing of (key, value) pairs in the "attributes" of a mesh primitive when the primitive mode is 7 (GAUSSIAN) according to some embodiments.

As illustrated at 1201, this process happens every time a (key, value) pair in the "attributes" property of a mesh primitive with a mode of 7 (GAUSSIAN) is being processed in the glTF file. At 1202, 1203, if the key is "POSITION", then the value is the index of an existing accessor in the gITF. The referenced accessor contains the center of each Gaussian. At 1204, 1205, if the key is "NORMAL", then the value is the index of an existing accessor in the gITF. The referenced accessor contains the normal of each Gaussian. At 1206, 1207: if the key is "COLOR_n" where *n* is 1 ("COLOR_1"), 2 ("COLOR_2), 3 ("COLOR_3") or 4 ("COLOR_4"), then the value is the index of an existing accessor in the gITF. The referenced accessor contains the color of each Gaussian for set *n.* At 1208, in case of an invalid key, an error is issued. At 1209 parsing of this (key, pair) pair ends with success.

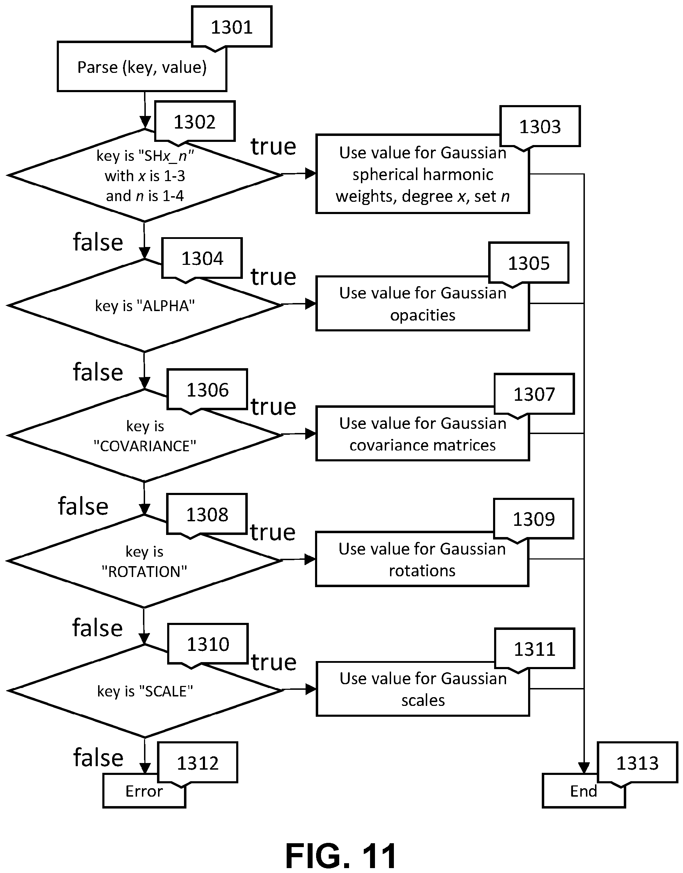

FIG. 11 is a flow diagram illustrating parsing of (key, value) pairs in the "attributes" of "MPEG_primitive_gaussian" in the "extensions" property of a mesh primitive when the primitive mode is 7 (GAUSSIAN) according to some embodiments.

As illustrated at 1301, this process is performed every time a (key, value) pair in the "attributes" property of "MPEG_primitive_gaussian" in the "extensions" property a mesh primitive with a mode of 7 (GAUSSIAN) is being processed in the glTF file. At 1302, 1303, if the key is "SHx_n" where x is 0, 1 or 2 and *n* is 1, 2, 3 or 4 (for instance, for "SH2_3", then x is 2 and *n* is 3) then the value is the index of an existing accessor in the gITF. The referenced accessor contains the weights of spherical harmonics of degree x of each Gaussian for set *n.* If colors were already defined for set *n*, then the parsing fails. At 1304, 1305, if the key is "ALPHA", then the value is the index of an existing accessor in the gITF. The referenced accessor contains the opacity of each Gaussian. At 1306, 1307, if the key is "COVARIANCE", then the value is the index of an existing accessor in the gITF. The referenced accessor contains the covariance matrix of each Gaussian. If the rotations or scales were already defined, then the parsing fails. At 1308, 1309, if the key is "ROTATION", then the value is the index of an existing accessor in the gITF. The referenced accessor contains the rotation (a quaternion) of each Gaussian. If the covariance matrices were already defined, then the parsing fails. At 1310, 1311, if the key is "SCALE", then the value is the index of an existing accessor in the gITF. The referenced accessor contains the scale factors for each axis (X, Y, Z) of each Gaussian. If the covariance matrices were already defined, then the parsing fails. If the key is invalid, then an error is issued at 1312. At 1313, parsing of this (key, pair) pair ends with success.

In some embodiments, a decoding method comprises obtaining a file including data representing an avatar. The file in this example includes both mesh data representing the avatar and Gaussian mixture data representing the avatar. A determination is made of whether to represent the avatar using the mesh data alone or to represent the avatar using the mesh data in combination with the Gaussian mixture data. The avatar is then rendered according to the determination. In some embodiments, the determination may be made based on the processing power of the decoder apparatus. In some embodiments, the determination may be made based on a distance or size of the avatar in a scene being rendered. Other considerations may contribute to the determination in other embodiments.

In some embodiments, a decoding method comprises: obtaining a file including data representing an avatar, the file including at least one fine-details data structure; parsing information in the fine-details data structure to determine whether a type of the fine details is a Gaussian type; and in response to a determination that the type of fine details is a Gaussian type, determining a Gaussian mixture identified by the fine-details data structure and decoding the Gaussian mixture.

A decoding apparatus according to one embodiment comprises one or more processors configured to perform at least: obtaining a file including data representing an avatar, the file including at least one fine-details data structure; parsing information in the fine-details data structure to determine whether a type of the fine details is a Gaussian type; and in response to a determination that the type of fine details is a Gaussian type, determining a Gaussian mixture identified by the fine-details data structure and decoding the Gaussian mixture.

Some embodiments further comprise rendering the avatar based on the Gaussian mixture.

In some embodiments, the file includes a list of at least one level-of-detail data structure, the fine-details data structure being included in the level-of-detail data structure.

In some embodiments, the file includes a list of at least one cloud property, at least one of the cloud properties being the Gaussian mixture identified by the fine-details data structure.

Some embodiments further comprise parsing information in the cloud property to determine whether a type of the cloud property is a Gaussian mixture; and in response to a determination that the type of the cloud property is a Gaussian mixture, identifying a set of rotation information, scale information, or covariance matrix information for Gaussians in the Gaussian mixture, wherein decoding the Gaussian mixture includes decoding the set of rotation information, scale information, or covariance matrix information.

In some embodiments, the fine-details data structure is included in an MPEG avatar extension.

In some embodiments, the file includes a list of at least one mesh primitive data structure, the mesh primitive data structure including attribute data identifying a set of rotation information, scale information, or covariance matrix information for Gaussians in the Gaussian mixture, and wherein decoding the Gaussian mixture includes decoding the set of rotation information, scale information, or covariance matrix information.

In some embodiments, the attribute data is provided in an MPEG primitive Gaussian extension.

An encoding method according to some embodiments comprises: encoding Gaussian mixture data representing an avatar; encoding a file including data associated with the avatar, the file including at least one fine-details data structure; wherein the fine-details data structure includes information indicating that a type of the fine details is a Gaussian type; and wherein the fine details data structure includes information identifying the Gaussian mixture data.

An encoding apparatus according to some embodiments comprises one or more processors configured to perform at least: encoding Gaussian mixture data representing an avatar; encoding a file including data associated with the avatar, the file including at least one fine-details data structure; wherein the fine-details data structure includes information indicating that a type of the fine details is a Gaussian type; and wherein the fine details data structure includes information identifying the Gaussian mixture data.

In some embodiments, the file includes a list of at least one level-of-detail data structure, the fine-details data structure being included in the level-of-detail data structure.

In some embodiments, the file includes a list of at least one cloud properties at least one of the cloud properties being the Gaussian mixture identified by the fine-details data structure.

Some embodiments further comprise encoding information in the cloud property to indicate that a type of the cloud property is a Gaussian mixture; and encoding in the cloud property information identifying a set of rotation information, scale information, or covariance matrix information for Gaussians in the Gaussian mixture.

In some embodiments, the fine-details data structure is encoded in an MPEG avatar extension.

In some embodiments, the file includes a list of at least one mesh primitive data structure, the mesh primitive data structure including attribute data identifying a set of rotation information, scale information, or covariance matrix information for Gaussians in the Gaussian mixture, and wherein encoding the Gaussian mixture data includes encoding the set of rotation information, scale information, or covariance matrix information.

In some embodiments, the attribute data is provided in an MPEG primitive Gaussian extension.

### Example Apparatus

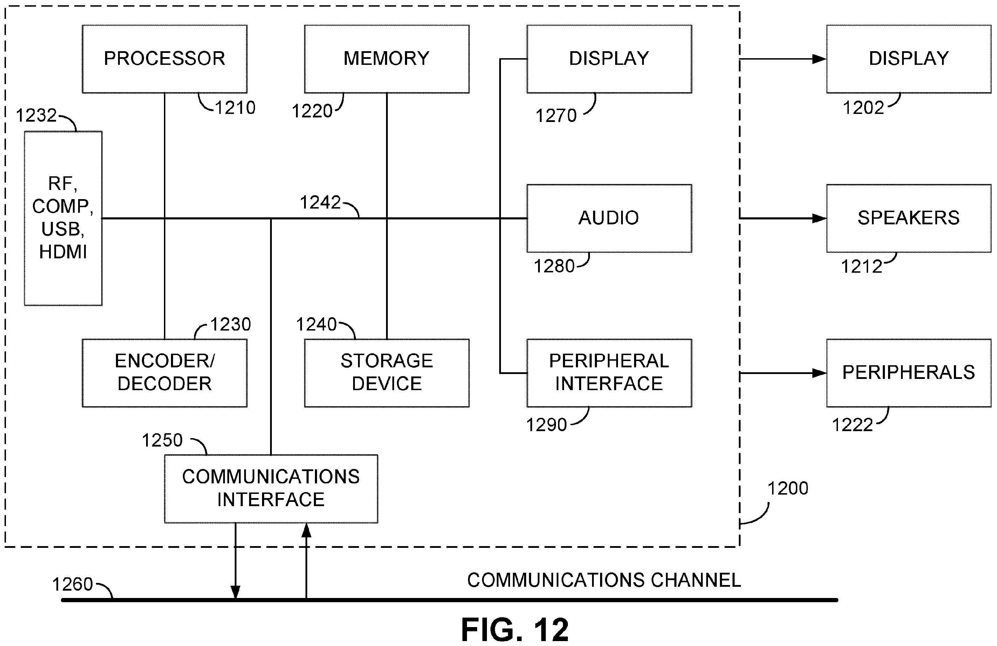

Some embodiments may be implemented on a system of one or more processors as illustrated in FIG. 12. FIG. 12 is a block diagram of an example of a system in which various aspects and embodiments are implemented. System 1200 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1200, singly or in combination, can be embodied in a single integrated circuit (IC), multiple ICs, and/or discrete components. For example, in at least one embodiment, the processing and encoder/decoder elements of system 1200 are distributed across multiple ICs and/or discrete components. In various embodiments, the system 1200 is communicatively coupled to one or more other systems, or other electronic devices, via, for example, a communications bus or through dedicated input and/or output ports. In various embodiments, the system 1200 is configured to implement one or more of the aspects described in this document.

The system 1200 includes at least one processor 1210 configured to execute instructions loaded therein for implementing, for example, the various aspects described in this document. Processor 1210 can include embedded memory, input output interface, and various other circuitries as known in the art. The system 1200 includes at least one memory 1220 (e.g., a volatile memory device, and/or a non-volatile memory device). System 1200 includes a storage device 1240, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1240 can include an internal storage device, an attached storage device (including detachable and non-detachable storage devices), and/or a network accessible storage device, as non-limiting examples.

System 1200 includes an encoder/decoder module 1230 configured, for example, to process data to provide an encoded video or decoded video, and the encoder/decoder module 1230 can include its own processor and memory. The encoder/decoder module 1230 represents module(s) that can be included in a device to perform the encoding and/or decoding functions. As is known, a device can include one or both of the encoding and decoding modules. Additionally, encoder/decoder module 1230 can be implemented as a separate element of system 1200 or can be incorporated within processor 1210 as a combination of hardware and software as known to those skilled in the art.

Program code to be loaded onto processor 1210 or encoder/decoder 1230 to perform the various aspects described in this document can be stored in storage device 1240 and subsequently loaded onto memory 1220 for execution by processor 1210. In accordance with various embodiments, one or more of processor 1210, memory 1220, storage device 1240, and encoder/decoder module 1230 can store one or more of various items during the performance of the processes described in this document. Such stored items can include, but are not limited to, the input scene description file, the decoded scene or portions of the decoded scene, the bitstream, matrices, variables, and intermediate or final results from the processing of equations, formulas, operations, and operational logic.

In some embodiments, memory inside of the processor 1210 and/or the encoder/decoder module 1230 is used to store instructions and to provide working memory for processing that is needed during encoding or decoding. In other embodiments, however, a memory external to the processing device (for example, the processing device can be either the processor 1210 or the encoder/decoder module 1230) is used for one or more of these functions. The external memory can be the memory 1220 and/or the storage device 1240, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1200 can be provided through various input devices as indicated in block 1232. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1232 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1200 to other electronic devices across USB and/or HDMI connections. It is to be understood that various aspects of input processing, for example, Reed-Solomon error correction, can be implemented, for example, within a separate input processing IC or within processor 1210 as necessary. Similarly, aspects of USB or HDMI interface processing can be implemented within separate interface ICs or within processor 1210 as necessary. The demodulated, error corrected, and demultiplexed stream is provided to various processing elements, including, for example, processor 1210, and encoder/decoder 1230 operating in combination with the memory and storage elements to process the datastream as necessary for presentation on an output device.

Various elements of system 1200 can be provided within an integrated housing, Within the integrated housing, the various elements can be interconnected and transmit data therebetween using suitable connection arrangement 1242, for example, an internal bus as known in the art, including the Inter-IC (I2C) bus, wiring, and printed circuit boards.

The system 1200 includes communication interface 1250 that enables communication with other devices via communication channel 1260. The communication interface 1250 can include, but is not limited to, a transceiver configured to transmit and to receive data over communication channel 1260. The communication interface 1250 can include, but is not limited to, a modem or network card and the communication channel 1260 can be implemented, for example, within a wired and/or a wireless medium.

Data is streamed, or otherwise provided, to the system 1200, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1260 and the communications interface 1250 which are adapted for Wi-Fi communications. The communications channel 1260 of these embodiments is typically connected to an access point or router that provides access to external networks including the Internet for allowing streaming applications and other over-the-top communications. Other embodiments provide streamed data to the system 1200 using a set-top box that delivers the data over the HDMI connection of the input block 1232. Still other embodiments provide streamed data to the system 1200 using the RF connection of the input block 1232. As indicated above, various embodiments provide data in a non-streaming manner. Additionally, various embodiments use wireless networks other than Wi-Fi, for example a cellular network or a Bluetooth network.

The system 1200 can provide an output signal to various output devices, including a display 1202, speakers 1212, and other peripheral devices 1222. The display 1202 of various embodiments includes one or more of, for example, a touchscreen display, an organic light-emitting diode (OLED) display, a curved display, and/or a foldable display. The display 1202 can be for a television, a tablet, a laptop, a cell phone (mobile phone), or other device. The display 1202 can also be integrated with other components (for example, as in a smart phone), or separate (for example, an external monitor for a laptop). The other peripheral devices 1222 include, in various examples of embodiments, one or more of a stand-alone digital video disc (or digital versatile disc) (DVR, for both terms), a disk player, a stereo system, and/or a lighting system. Various embodiments use one or more peripheral devices 1222 that provide a function based on the output of the system 1200. For example, a disk player performs the function of playing the output of the system 1200.

In various embodiments, control signals are communicated between the system 1200 and the display 1202, speakers 1212, or other peripheral devices 1222 using signaling such as AV.Link, Consumer Electronics Control (CEC), or other communications protocols that enable device-to-device control with or without user intervention. The output devices can be communicatively coupled to system 1200 via dedicated connections through respective interfaces 1270, 1280, and 1290. Alternatively, the output devices can be connected to system 1200 using the communications channel 1260 via the communications interface 1250. The display 1202 and speakers 1212 can be integrated in a single unit with the other components of system 1200 in an electronic device such as, for example, a television. In various embodiments, the display interface 1270 includes a display driver, such as, for example, a timing controller (T Con) chip.

The display 1202 and speaker 1212 can alternatively be separate from one or more of the other components, for example, if the RF portion of input 1232 is part of a separate set-top box. In various embodiments in which the display 1202 and speakers 1212 are external components, the output signal can be provided via dedicated output connections, including, for example, HDMI ports, USB ports, or COMP outputs.

The embodiments can be carried out by computer software implemented by the processor 1210 or by hardware, or by a combination of hardware and software. As a non-limiting example, the embodiments can be implemented by one or more integrated circuits. The memory 1220 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1210 can be of any type appropriate to the technical environment, and can encompass one or more of microprocessors, general purpose computers, special purpose computers, and processors based on a multi-core architecture, as non-limiting examples.

### Additional Embodiments

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A decoding method comprising:
obtaining a file including data representing an avatar, the file including at least one fine-details data structure;
parsing information in the fine-details data structure to determine whether a type of the fine details is a Gaussian type; and
in response to a determination that the type of fine details is a Gaussian type, determining a Gaussian mixture identified by the fine-details data structure and decoding the Gaussian mixture.

2. A decoding apparatus comprising one or more processors configured to perform at least:
obtaining a file including data representing an avatar, the file including at least one fine-details data structure;
parsing information in the fine-details data structure to determine whether a type of the fine details is a Gaussian type;
in response to a determination that the type of fine details is a Gaussian type, determining a Gaussian mixture identified by the fine-details data structure and decoding the Gaussian mixture.

3. The method of claim 1 or the apparatus of claim 2, further comprising rendering the avatar based on the Gaussian mixture.

4. The method of claim 1 or claim 3 as it depends from claim 1, or the apparatus of claim 2 or claim 3 as it depends from claim 2, wherein the file includes a list of at least one level-of-detail data structure the fine-details data structure being included in the level-of-detail data structure.

5. The method of claim 1 or claims 3-4 as they depend from claim 1, or the apparatus of claim 2 or claims 3-4 as they depend from claim 2, wherein the file includes a list of at least one cloud properties, at least one of the cloud properties being the Gaussian mixture identified by the fine-details data structure.

6. The method of claim 5 as it depends from claim 1, or the apparatus of claim 5 as it depends from claim 2, further comprising parsing information in the cloud property to determine whether a type of the cloud property is a Gaussian mixture; and
in response to a determination that the type of the cloud property is a Gaussian mixture, identifying a set of rotation information, scale information, or covariance matrix information for Gaussians in the Gaussian mixture, wherein decoding the Gaussian mixture includes decoding the set of rotation information, scale information, or covariance matrix information.

7. The method of claim 1 or claims 3-4 as they depend from claim 1, or the apparatus of claim 2 or claims 3-4 as they depend from claim 2, wherein the fine-details data structure is included in an MPEG avatar extension.

8. The method of claim 1 or claims 3-4 or 7 as they depend from claim 1, or the apparatus of claim 2 or claims 3-4 or 7 as they depend from claim 2, wherein the file includes a list of at least one mesh primitive data structure, the mesh primitive data structure including attribute data identifying a set of rotation information, scale information, or covariance matrix information for Gaussians in the Gaussian mixture, and wherein decoding the Gaussian mixture includes decoding the set of rotation information, scale information, or covariance matrix information.

9. The method of claim 8 as it depends from claim 1, or the apparatus of claim 8 as it depends from claim 2, wherein the attribute data is provided in an MPEG primitive Gaussian extension.

10. An encoding method comprising:
encoding Gaussian mixture data representing an avatar;
encoding a file including data associated with the avatar, the file including at least one fine-details data structure;
wherein the fine-details data structure includes information indicating that a type of the fine details is a Gaussian type; and
wherein the fine details data structure includes information identifying the Gaussian mixture data.

11. An encoding apparatus comprising one or more processors configured to perform at least:
encoding Gaussian mixture data representing an avatar;
encoding a file including data associated with the avatar, the file including at least one fine-details data structure;
wherein the fine-details data structure includes information indicating that a type of the fine details is a Gaussian type; and
wherein the fine details data structure includes information identifying the Gaussian mixture data.

12. The method of claim 10 or the apparatus of claim 11, wherein the file includes a list of at least one level-of-detail data structure the fine-details data structure being included in the level-of-detail data structure.

13. The method of claim 10 or claim 12 as it depends from claim 10, or the apparatus of claim 11 or claim 12 as it depends from claim 11, wherein the file includes a list of at least one cloud properties, at least one of the cloud properties being the Gaussian mixture identified by the fine-details data structure, further comprising:
encoding information in the cloud property to indicate that a type of the cloud property is a Gaussian mixture; and
encoding in the cloud property information identifying a set of rotation information, scale information, or covariance matrix information for Gaussians in the Gaussian mixture.

14. The method of claim 10 or the apparatus of claim 11, wherein the file includes a list of at least one mesh primitive data structure, the mesh primitive data structure including attribute data identifying a set of rotation information, scale information, or covariance matrix information for Gaussians in the Gaussian mixture, and wherein encoding the Gaussian mixture data includes encoding the set of rotation information, scale information, or covariance matrix information.

15. The method of claim 14 as it depends from claim 10, or the apparatus of claim 14 as it depends from claim 11, wherein the attribute data is provided in an MPEG primitive Gaussian extension.
